# EUROPÄISCHE PATENTSCHRIFT

(11) **EP 3 795 883 B1**
(45) Veröffentlichungstag und Bekanntmachung des Hinweises auf die Patenterteilung: **20.03.2024**
(21) Anmeldenummer: 20194278.6
(22) Anmeldetag: 03.09.2020
(51) Int. Cl.: F16M 11/10, F16M 11/24

(54) **GERÄTEHALTER**
DEVICE HOLDER
PORTE-APPAREIL

(30) Priorität: 17.09.2019 DE 102019125037
(43) Veröffentlichungstag der Anmeldung: 24.03.2021
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- WO-A1-2017/068890
- US-A1- 2012 006 767

## Beschreibung

Die Erfindung betrifft einen Gerätehalter vorzugsweise für einen zu haltenden Monitor mit einem Basisteil und einem Ankupplungsteil und einer das Basisteil und das Ankupplungsteil koppelnden Gelenkanordnung, welche zumindest ein drehbar gelagertes, höhenverstellbares Glied umfasst.

Gerätehaltevorrichtungen bzw. Gerätehalter haben die Aufgabe, unterschiedlich schwere Geräte, beispielsweise einen oder mehrere Monitore, in einer gewünschten Position in der Schwebe zu halten. Außerdem soll die Position der Geräte dabei nahezu beliebig, beispielsweise auf eine ergonomische Position für einen jeweiligen Benutzer oder für unterschiedliche Einsatzzwecke, einstellbar sein. Dazu besitzen Gerätehalter üblicherweise u. a. eine Mehrzahl unterschiedlicher Arme, Gelenke bzw. Drehlager sowie dementsprechend auch zu sichernde Gelenköffnungen zwischen beispielsweise zwei solchen Gelenken. Da Gerätehalter praktischerweise zumeist manuell zu bedienen sind, also z. B. händisch, ist es besonders wichtig, dass die zu haltenden Geräte bequem und bedienungsfreundlich aber vor allem sorglos in unterschiedliche Positionen, z. B. in der Höhe oder auch seitlich, verfahren werden können, ohne dass es dabei z. B. zu einem Einklemmen der Finger kommen kann. Zudem ergibt sich aufgrund der zunehmend erwünschten, steigenden Anzahl an Armen, Gelenken und zueinander beweglichen Gliedern das Problem, dass es bei Relativbewegungen einzelner, zueinander beweglicher Glieder eines Gerätehalters theoretisch zur Kollision kommen kann.

Bei bereits bekannten Gerätehaltern wird z. B. die erstgenannte Problematik einfach durch optisch abgehobene Griffflächen an den Armen gelöst. Dabei kommt es aber darauf an, ob ein Benutzer die Griffflächen erkennt und sich geschickt und vorsichtig bei der Bedienung anstellt. Unachtsame Benutzung kann deshalb trotzdem zu einem Einklemmen der Finger führen.

Aus der US 2012/0006767 ist beispielsweise ein Bildschirm-Trägergerät bekannt, bei welchem der Drehradius zwischen einer Basis und einem ersten Arm sowie einem Bildschirm und einem zweiten Arm jeweils auf einen 180°-Drehwinkel beschränkt ist, womit eine Kollision des Bildschirms mit dem zweiten Arm sowie mit einer Wand hinter dem Bildschirm-Trägergerät bedingt vermieden werden kann, zumindest, wenn das Bildschirm-Trägergerät dafür gerade auch günstig zur Wand steht bzw. ausgerichtet ist. Ein Einklemmen der Finger zwischen den Armen kann allerdings nicht sicher verhindert werden.

Es ist daher eine Aufgabe der vorliegenden Erfindung, einen sichereren Gerätehalter anzugeben.

Diese Aufgabe wird durch einen Gerätehalter gemäß Patentanspruch 1 gelöst.

Wie eingangs erwähnt, umfasst der erfindungsgemäße Gerätehalter - wie üblich - ein Basisteil zur Anordnung bzw. Montage des Gerätehalters an einem beliebigen Bezugsobjekt, d. h. z. B. kann das Basisteil ein Bodenständer für einen Boden, eine Wandhalterung für eine Wand, eine Tischklemme für einen Tisch o. Ä. sein. Weiter weist er ein Ankupplungsteil auf, um ein Gerät mit dem Gerätehalter zu kuppeln. Das Ankupplungsteil kann z. B. nach VESA-Norm ausgebildet sein, womit eine einfache und schnelle Installation bzw. Anbringung eines entsprechenden Monitors sichergestellt wird. Bei dem zu haltenden Gerät kann es sich vorzugsweise um eine Benutzerschnittstelle handeln, wie eine Tastatur oder insbesondere eine - vorzugsweise elektrische - Anzeigevorrichtung (also einen Monitor), insbesondere auch eine mit einem Touchscreen ausgestattete Anzeigevorrichtung. Der Gerätehalter dient somit insbesondere als Monitorhalter.

Dabei ist das Basisteil über eine Gelenkanordnung mit zumindest einem Glied an einem Endabschnitt gelenkig über zumindest ein erstes Drehlager mit dem Ankupplungsteil verbunden. Die Gelenkanordnung umfasst dabei zumindest ein höhenverstellbares, erstes Glied, welches im ersten Drehlager um eine Drehlagerachse des ersten Drehlagers drehbar gelagert ist. Unter "höhenverstellbar" kann hier einfach beweglich gemeint sein, so dass eine Bewegung bzw. Höhenverstellung parallel zur Drehlagerachse ermöglicht wird, beispielsweise eine Art "Parallelogramm-Gelenk" oder dergleichen. Dieses umfasst z. B. jeweils zwei, zueinander parallele, gelenkig verbundene Streben, d. h. zwei parallele Längsstreben und zwei parallele Querstreben. Die parallelen Längsstreben können vorzugsweise einen "Doppelarm" bilden, der über die Querstreben jeweils endseitig, gelenkig verbunden ist. Dadurch wird ein Parallelogramm aufgespannt, das sich mittels der Gelenke in unterschiedliche Formen bzw. Stellungen bringen lässt. Bei entsprechender Anordnung wird so eine Höhenverstellbarkeit einer der im Wesentlichen vertikalen Querstreben relativ zur gegenüberliegenden, parallelen Querstrebe bewirkt.

Der Gerätehalter umfasst dann erfindungsgemäß eine Hubmechanik, die bevorzugt rein mechanisch, besonders bevorzugt mit einfachen mechanischen, kostengünstigen Elementen ausgebildet ist. Sie erzeugt bei einer Drehung um die Drehlagerachse, z. B. mittels Formschluss, Spannfeder o. Ä. einen Hub parallel zur Drehlagerachse.

Die Hubmechanik dient dabei dazu, die Bewegung des betreffenden, höhenverstellbaren Glieds kollisionsfrei zu gestalten, zumindest wenn sich das erste Glied in einem Sicherheitsbereich bzw. Sicherheitsabstandsbereich um einen potentiellen Kollisionsbereich befindet. Unter einem "Kollisionsbereich" ist ein Bereich gemeint, in welchem sich das erste Glied bei einer Drehbewegung auf einem potentiellen Kollisionskurs befindet, so dass es zu einer Kollision kommen würde. Mit dem Sicherheitsbereich wird daher ein erweiterter, definierter Umgebungsbereich um den Kollisionsbereich des Gerätehalters definiert. Tritt das erste Glied, auf einem Kollisionskurs, in den Sicherheitsbereich ein, wird es vorzugsweise auf einen kollisionsvermeidenden Kurs gezwungen. Ein solcher Sicherheitsbereich könnte vorzugsweise ein definierter Winkelbereich der Drehlagerachse des ersten Glieds sein. Ohne die Hubmechanik bzw. eine zusätzliche manuelle Führung durch einen Benutzer könnte es zu einer Kollision des ersten Glieds z. B. mit einem weiteren Element des Gerätehalters kommen. Um dies zu vermeiden, erzwingt bzw. bewirkt die Hubmechanik bei einer Drehbewegung des ersten Glieds um die Drehlagerachse in dem vorgegebenen Winkelbereich des ersten Drehlagers einen Hub parallel zur Drehlagerachse. Der Winkelbereich kann z. B. werksseitig definiert bzw. fertigungsbedingt vorgegeben sein. Unter einem solchen Hub ist eine einfache Bewegung, beispielsweise ein aufwärtsgerichteter Hub bzw. Aufwärtshub, zu verstehen, mittels welchem hier z. B. das erste Glied zwangsgeführt angehoben bzw. aus dem Kollisionsbereich bewegt wird. "Zumindest wenn sich das erste Glied in einem Sicherheitsbereich um einen potentiellen Kollisionsbereich befindet", heißt hier, dass die Hubmechanik jedenfalls, wenn sich das erste Glied in den Sicherheitsbereich um den Kollisionsbereich bewegt, einen Hub erzeugt. Ansonsten kann sie ggf. auch einen Hub erzeugen, allerdings nicht zwangsläufig.

Der Hub kann grundsätzlich, also je nach Ausrichtung der Hubmechanik, in jede Raumrichtung erfolgen. Im Folgenden erfolgt der Hub jedoch ohne Beschränkung der Allgemeinheit in einer vertikalen Richtung, d. h. nach oben oder unten.

Ein erfindungsgemäßer Gerätehalter weist ein Basisteil und ein Ankupplungsteil auf. Er umfasst zudem eine das Basisteil und das Ankupplungsteil koppelnde Gelenkanordnung, welche zumindest ein höhenverstellbares, erstes Glied aufweist. Weiter umfasst er ein Gehäuse. Der Gerätehalter weist zudem ein am oder im Gehäuse, vorzugsweise federnd, gelagertes Abdeckschott auf, das dauerhaft bzw. stets einen veränderlichen Spalt zwischen dem Gehäuse und dem ersten Glied bzw. einem Teil des ersten Glieds abdeckt. "Veränderlich" meint hier, dass sich der Spalt bei der Höhenverstellung des ersten Glieds öffnet bzw. schließt, wenn er nicht fortlaufend bzw. konstant abgedeckt wird. Die hier beschriebenen Komponenten können ggf. dieselbe Wirkung erzielen bzw. demselben Zweck dienen, wie die oben beschriebenen gleichnamigen Komponenten.

Der hier beschriebene Gerätehalter stellt gegenüber dem weiter oben beschriebenen Gerätehalter eine eigenständige Idee dar. Besondere synergetische Effekte ergeben sich jedoch bei einer Kombination der beiden Ideen. So lassen sich dann zumindest einzelne Glieder des Gerätehalters gefahrlos bedienen, also beispielsweise aus beliebigen Stellungen relativ zueinander verfahren oder drehen. Zugleich lassen sich aber auch einfach Glieder des Gerätehalters problemlos überall betätigen bzw. anfassen, wenn sie bewegt werden sollen.

Durch die erfindungsgemäße Verwendung eines, vorzugsweise federnd gelagerten, Abdeckschotts, wird in einem Spalt zwischen einer der Streben des höhenverstellbaren, ersten Glieds und dem Gehäuse des Gerätehalters dafür gesorgt, dass z. B. Finger bzw. Körperteile gegen Einklemmen darin geschützt sind bzw. einer entsprechenden Verletzung vorgebeugt wird. Alternativ oder zusätzlich kann der Gerätehalter damit auch relativ zu sich selbst kollisionsgeschützt bzw. kollisionsfrei verfahren werden, indem die Hubmechanik bei der Drehbewegung des ersten Glieds um die Drehlagerachse im vorgegebenen Winkelbereich des ersten Drehlagers den oben erwähnten Hub parallel zur Drehlagerachse bewirkt, zumindest wenn sich das erste Glied im Sicherheitsbereich um einen potentiellen Kollisionsbereich befindet.

Insgesamt kann also mit der Erfindung dafür gesorgt werden, dass zu haltende Geräte sicherer bedient werden können. Bei dem zu haltenden Gerät handelt es sich meist um teure bzw. sensible Geräte. Bei eben solchen derart kostspieligen Geräten ist also eine kollisionsgesicherte bzw. kollisionsgeschützte, weiter unten detailliert erläuterte, "Überschwenkautomatik" - nämlich in Form des durch die Hubmechanik im Sicherheitsbereich um einen Kollisionsbereich ausgelösten Hubs - zwischen beliebigen Positionen besonders wichtig. Vor allem ist erfindungsgemäß auch bei einem unachtsamen Benutzer sichergestellt, dass dieser den Gerätehalter sorglos bedienen kann, ohne bei einer Schwenkbewegung des Geräts - z. B. durch eine leichte Berührung, insbesondere aber z. B. bei einem zügigen Schwenken einer zu haltenden Tastatur oder eines Touchscreens - einen Schaden verursachen zu können.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bevorzugt kann die Hubmechanik zumindest zwei kinematisch gekoppelte, d. h. bewegungsgekoppelte, Elemente mit je einer Flanke umfassen. Die Flanke oder auch Flankenseite definiert dabei zugleich eine Seite der beiden Elemente, an der sie sich gegenseitig berühren können und demnach aufeinander wirken. Bei einer relativen Drehbewegung zueinander können die beiden Elemente, genauer gesagt die Flanken beider Elemente, vorzugsweise aufeinander gleiten und damit formschlüssig den Hub erzwingen. Es erfolgt also bevorzugt eine formschlüssig erzwungene "Schraubenbewegung".

Hierzu kann der durch die Hubmechanik erzeugte Hub mittels eines der kinematisch gekoppelten Elemente dadurch erzielt werden, dass dieses vorzugsweise ein Drehmoment auf das erste Glied ausübt, indem es beispielsweise beabstandet zu einem Drehpunkt eines Gelenks auf das erste Glied wirkt und damit eine Hebelwirkung bzw. einen Hebel erzeugt. Dabei kann das Gelenk - wie weiter unten noch erläutert wird - vorzugsweise zwischen einer Längsstrebe und einer Querstrebe des ersten Glieds angeordnet sein und diese Streben gelenkig verbinden.

Vorzugsweise kann der durch die Hubmechanik erzeugte Hub einen Aufwärtshub umfassen, der dafür sorgt, dass das erste Glied zumindest temporär, d. h. zumindest in einem Abschnitt des vorgegebenen Winkelbereichs aus dem Kollisionsbereich, insbesondere entgegen der wirkenden Schwerkraft, gehoben werden kann.

Für die Ausgestaltung der kinematisch gekoppelten Elemente der Hubmechanik gibt es unterschiedliche Möglichkeiten.

Vorzugsweise kann zumindest die Flankenseite eines der beiden Elemente eine Schräge aufweisen bzw. nach Art einer Rampe ausgebildet sein. Unter der Rampe bzw. Schräge ist hier zunächst einfach eine schräg bzw. schief verlaufende Ebene quer bzw. schräg zur Drehlagerachse gemeint. Dadurch wird eine kontinuierliche Hubbewegung erzeugt.

Besonders bevorzugt können auch beide Elemente jeweils eine Flanke mit einer solchen Schräge aufweisen, so dass eine "weicher" bzw. runder geführte Schraubenbewegung erfolgen kann, bei der die Flankenseiten bei einer betragsmäßig-gleichen, aber gegensätzlichen Steigung der Schrägen entsprechend eine vergrößerte Kontaktfläche aufweisen.

Vorzugsweise können die kinematisch gekoppelten Elemente der Hubmechanik allerdings als eine im Wesentlichen kreisförmige, erste Kulissennut und als ein in der Kulissennut geführter Kulissenstein ausgebildet sein. "Im Wesentlichen kreisförmig" meint hier, dass sich die Kulissennut zumindest über ein Kreissegment, d. h. über einen reduzierten Winkelbereich eines Vollkreises erstreckt. Bei der Drehbewegung der Elemente relativ zueinander um die Drehlagerachse kann somit die Ausgestaltung der Kulissennut über den Kulissenstein auf das erste Glied übertragen werden und so also vorzugsweise automatisch ein Hub bzw. die oben erwähnte "Überschwenkautomatik" formschlüssig erzwungen werden. Unter einer solchen Überschwenkautomatik ist ein derartig geführter Bewegungsverlauf zu verstehen, bei dem ein Bauteil ein weiteres Bauteil bei einer Relativbewegung automatisch überschwenkt, ohne dass manuell nachgeholfen werden muss, um die Kollision entsprechend zu verhindern.

Besonders bevorzugt können sowohl die Kulissennut als auch der Kulissenstein eine solche, zuvor erwähnte Schräge bzw. Flanke mit einer Schräge aufweisen. "Schräg" bezieht sich hier auf eine Steigung - d. h. auf eine Veränderung der Tiefe im Verlauf - der Kulissennut zumindest innerhalb des definierten Winkelbereichs.

Ganz besonders bevorzugt kann die Kulissennut im betreffenden Winkelbereich eine reduzierte Tiefe aufweisen. D. h. die Kulissennut kann beispielsweise in zumindest einem Kreissegment bzw. -abschnitt flacher ausgebildet sein als im übrigen Kreissegment. Vorzugsweise kann sich die Kulissennut im Verlauf des betreffenden Winkelbereichs von einer definierten, maximalen Tiefe auf eine definierte, minimale Tiefe reduzieren und danach wieder auf die maximale Tiefe erhöhen. Ein solcher bogenförmiger Verlauf sorgt für eine entsprechende Hubbewegung des Kulissensteins, wenn dieser entlang der Kulissennut über das Minimum hinweg bewegt und somit temporär teilweise oder vollständig aus der Kulissennut gedrückt wird. Die minimale Tiefe kann dabei als die Tiefe definiert sein, bei der die Kulissennut "eben" relativ zu einer Umgebung bzw. einer Begrenzung der Kulissennut ausgebildet ist, also die Kulissennut keine oder nur eine sehr geringe bzw. minimale Vertiefung aufweist. Die minimale Tiefe bzw. das Minimum der Kulissennut kann im Folgenden auch als zentrale Stellung, Plateaustellung bzw. Extremalstellung im definierten Winkelbereich bezeichnet werden.

Durch die sich beidseitig reduzierende bzw. erhöhende Kulissennut, d. h. von zwei azimutalen Umlaufrichtungen relativ zur Drehlagerachse ansteigend bzw. abfallend auf eine minimale bzw. maximale Tiefe, kann dafür gesorgt werden, dass der Kulissenstein, welcher in der kreisförmigen Kulissennut im Kreis bewegt wird, im Uhrzeigersinn als auch gegen den Uhrzeigersinn bei Überschreiten der Plateaustellung einen maximalen, formschlüssig erzwungenen Hub erzeugt. Gleichzeitig erlaubt eine solche Ausbildung der Kulissennut, dass der Kulissenstein nach Überschreiten des Minimums der Tiefe der Kulissennut auf Wunsch beispielsweise wieder im Laufe der Kreisbewegung bis in die vorherige Position gesenkt werden kann, diesmal jedoch auf der anderen Seite der Extremalstellung bzw. zentralen Stellung.

Von der Plateaustellung bzw. zentralen Stellung ausgehend kann die erste Kulissennut bevorzugt zu beiden Seiten jeweils innerhalb eines 90° Winkelbereichs, besonders bevorzugt innerhalb eines 80° Winkelbereichs, ganz besonders bevorzugt innerhalb eines 70° Winkelbereichs und am meisten bevorzugt innerhalb eines 65° Winkelbereichs gleichmäßig auf ein Maximum der Tiefe der Kulissennut übergehen.

Vorzugsweise kann die Kulissennut auch stufenartig ausgebildet sein, zumindest dann, wenn der Kulissenstein eine Schräge aufweist. Damit lässt sich nämlich erreichen, dass die Hubbewegung in mehreren, vorzugsweise kleineren, Schritten "stufenweise" erfolgt und nicht wie oben beschrieben in einer fließenden bzw. stetigen Bewegung. Zugleich sorgt dies auch für weniger Reibung bei der relativen Gleitbewegung des Kulissensteins in der Kulissennut.

Auch für die Ausgestaltung bzw. Ausstattung der Gelenkanordnung gibt es unterschiedliche Möglichkeiten.

Das höhenverstellbare, erste Glied kann vorzugsweise einen Doppelarm mit zwei in Längsrichtung des Doppelarms verlaufenden, länglichen, voneinander beabstandeten Längsstreben und zwei die Längsstreben jeweils gelenkig verbindende Querstreben aufweisen. Die Querstreben können kürzer, vorzugsweise erheblich kürzer, als die Längsstreben sein. Außerdem können die Querstreben jeweils an zwei voneinander beabstandeten Gelenken die Längsstreben miteinander koppeln. Vorzugsweise bilden hierbei dann die Längsstreben und die Querstreben die Seiten eines Parallelogramms, welche insgesamt durch vier Gelenke des Doppelarms gelenkig verbunden sein können. Beispielsweise kann dann die Hubmechanik an der Querstrebe des ersten Glieds angebracht sein. Vorzugsweise kann die Hubmechanik allerdings in die Querstrebe integriert bzw. durch das Gehäuse umgeben sowie optisch eingefasst sein.

Das erwähnte Gehäuse kann beispielsweise zumindest ein Blendenelement umfassen, das dazu ausgebildet ist, ein optisch ansprechendes Design zu erzeugen. Vorzugsweise kann das Gehäuse auch eine Achsaufnahme umfassen, um die es sich zumindest z. T. erstreckt. Die Achsaufnahme kann vorzugsweise die Querstrebe des ersten Glieds umgeben, besonders bevorzugt zumindest die Längsstrebe drehbar zur Querstrebe lagern bzw. aufnehmen und ganz besonders bevorzugt zumindest teilweise einen von außen her, d. h. für einen Benutzer zugängigen Bereich am Spalt im Gelenk zwischen den Streben des ersten Glieds zumindest teilweise optisch und/oder physisch verdecken.

Vorzugsweise kann die Gelenkanordnung zusätzlich zum ersten Glied über mehrere, weitere Glieder verfügen, d. h. z. B. eine Kette von gelenkig verbundenen, zueinander beweglichen Gliedern bilden.

Vorzugsweise kann die Gelenkanordnung zusätzlich zum ersten Glied als ein zweites Glied - z. B. einen länglichen, vorzugsweise starren, Arm - aufweisen. Der Arm könnte beispielsweise zwischen dem Ankupplungsteil und dem ersten Glied oder dem Basisteil und dem ersten Glied angeordnet sein. Besonders bevorzugt kann der Arm über zumindest ein weiteres, zweites Drehlager mit dem Basisteil und über das erste Drehlager an einem Endabschnitt mit dem ersten Glied gekoppelt sein.

Alternativ oder zusätzlich können auch andere bewegliche Glieder der Gelenkanordnung in geeigneter Weise über weitere Drehlager gekoppelt sein.

Falls die Gelenkanordnung wie erwähnt mit einem zweiten Glied ausgestattet ist, kann vorzugsweise die Hubmechanik entsprechend dafür sorgen, dass eine Kollision des ersten Glieds mit dem zweiten Glied verhindert bzw. vermieden wird, sollten sich die Glieder beispielsweise in einem gegenseitigen Sicherheitsbereich um einen Kollisionsbereich befinden. Z. B. kann dies dann auftreten, wenn das erste Glied zumindest z. T. in eine Erstreckungsebene bzw. Verlaufsebene des zweiten Glieds hineinragt, und dabei das erste Glied das zweite Glied gleichzeitig passieren soll. D. h. also dann, wenn die Glieder in einer Ebene senkrecht zur Drehlagerachse aneinander vorbei bewegt bzw. relativ zueinander um das gemeinsame, erste Drehlager in dieser Ebene gedreht werden sollen. Bei der Erstreckungsebene bzw. Verlaufsebene des zweiten Glieds handelt es sich um den Bereich, in dem das zweite Glied aufgrund eines dazugehörigen zweiten Drehlagers bewegbar ist bzw. angeordnet werden kann. Daraus ergibt sich dann folglich auch der potentielle Sicherheitsbereich um einen Kollisionsbereich, in dem das erste Glied mit dem zweiten Glied des Gerätehalters kollidieren könnte.

Bevor das höhenverstellbare, erste Glied z. B. während der Drehbewegung in den Sicherheitsbereich um einen Kollisionsbereich geraten würde, kann es, vorzugsweise automatisch, angehoben werden, ehe die Glieder aneinanderstoßen. Dadurch kann es zu keinem Zusammenstoß zwischen dem Arm des zweiten Glieds und zumindest einem vom ersten Drehlager wegweisenden Abschnitt des ersten Glieds kommen. Anders ausgedrückt kann also die Hubmechanik dafür sorgen, dass die beiden Glieder in der zentralen Stellung des Winkelbereichs stets zueinander beabstandet angeordnet sind und somit nicht miteinander kollidieren können.

Vorzugsweise kann die Hubmechanik bewirken, dass die beiden Glieder in der zentralen Stellung bzw. Plateaustellung benachbart zueinander angeordnet sind bzw. sich übereinander befinden.

Weiterhin kann die Gelenkanordnung, beispielsweise mit einem solchen zweiten Glied, vorzugsweise auch eine zweite Kulissennut aufweisen. Gegenüber der ersten Kulissennut kann die zweite Kulissennut über einen definierten Winkelbereich vorzugsweise mit einer gleichbleibenden Tiefe ausgebildet sein. Er kann sich besonders bevorzugt über ein maximal über in etwa 200° erstreckendes Kreissegment um eine Drehlagerachse eines entsprechenden Drehlagers erstrecken. Beispielsweise können auch mehrere zweite Kulissennuten im Gerätehalter vorgesehen sein, z. B. nämlich an einem zweiten und/oder dritten Drehlager, um den Gerätehalter, insbesondere mehrfach, in seinem Drehwinkelbereich einzuschränken und damit mögliche Kollisionsquellen bzw. unvorteilhafte, sowieso nicht benötigte, Winkelbereiche zu reduzieren. Bevorzugt können hierbei das zweite Drehlager zwischen dem Ankupplungsteil und dem ersten Glied und das dritte Drehlager zwischen dem Basisteil und dem zweiten Glied angeordnet sein. Dabei können sich besonders bevorzugt die zugehörigen Drehlagerachsen des zweiten und dritten Drehlagers parallel zur Drehlagerachse des ersten Drehlagers erstrecken.

Bevorzugt kann sich dann zumindest um eines der beiden (also um das zweite und/oder dritte) Drehlager die zweite Kulissennut so erstrecken, dass die Drehbewegung des betreffenden Drehlagers auf einen 200°-Winkelbereich, besonders bevorzugt sogar einen 180°-Winkelbereich, eingeschränkt werden kann.

Damit kann vorteilhaft erreicht werden, dass der Gerätehalter noch sicherer gegen eine Kollision mit sich selbst oder mit einer Umgebung geschützt ist, da somit ja eine Schwenkbewegung bzw. Drehbewegung der Glieder des Gerätehalters in einen "rückseitigen" Winkelbereich jenseits der 200°, insbesondere 180°, d. h. in einem vom Monitor in Richtung einer Wand weisenden Winkelbereich, verhindert wird. Im "rückseitigen" Winkelbereich kann sich nämlich, beispielsweise bei einer Wandmontage des Basisteils des Gerätehalters, potentiell die dazu benötigte Wand oder dergleichen befinden, von der das Basisteil nach der Montage, vorzugsweise senkrecht, absteht. Durch den Abstand der Glieder des Gerätehalters zur Wand, der sich durch das von der Wand abstehende Basisteil ergibt, kann gegebenenfalls auch ein 200°-Winkelbereich noch eine mögliche Kollision des Gerätehalters mit der Wand verhindern.

Besonders bevorzugt kann sich die zweite Kulissennut auch nur über einen entsprechend angepassten Winkelbereich kleiner als 180°, ganz besonders bevorzugt kleiner als 120°, erstrecken, so dass es beispielsweise auch mit dem zu haltenden, daran angebrachten Monitor am Ende des Ankupplungsteils bei einer Drehbewegung nicht zu einem Zusammenstoß mit der betreffenden Wand kommen kann.

Wie bereits oben erwähnt, können sich weitere besondere synergetische Effekte eben dann ergeben, wenn der Kulissenstein zugleich als Abdeckschott ausgebildet ist und damit das Abdeckschott zugleich als eines der kinematischen gekoppelten Elemente der Hubmechanik wirkt. Im Folgenden wird deshalb das Abdeckschott auch synonym für den Kulissenstein verwendet.

Das Abdeckschott weist dazu unterseitig, an einer zum zweiten Glied weisenden Seite, eine Art "Nase" auf, die die Funktion des Kulissensteins übernimmt. Dabei wird das erste Glied beim Schwenken über das darunter liegende zweite Glied gemäß einer durch die erste Kulissennut im ersten Drehlager vorgegebenen Mindest-Höhenkurve verfahren, wenn das erste Glied nach unten geschwenkt ist, d. h. in den Sicherheitsbereich um einen Kollisionsbereich hineinragt. Dazu wird das erste Glied - sofern es nach unten bzw. schräg nach unten geschwenkt ist - in eine mindestens horizontale Lage parallel zum zweiten Glied hochgefahren bzw. gehoben, sobald das erste Glied über das zweite Glied hinweg geschwenkt wird.

Eine umgekehrte Schwenkbewegung des ersten Glieds relativ zum zweiten Glied, hier also z. B. nach unten (am zweiten Glied vorbei), ist beispielsweise auch möglich. Vorzugsweise kann nämlich genau dann eine Schwenkbewegung des ersten Glieds alternativ nach unten erfolgen, wenn das zweite Glied bei einer regulären Stellung des Gerätehalters oberhalb des ersten Glieds angeordnet ist.

Vorzugsweise kann das Abdeckschott in einer Öffnung bzw. einem Durchbruch der oben erwähnten Achsaufnahme beweglich gelagert angeordnet sein und dabei lediglich mit der Nase durch die Öffnung in die erste Kulissennut hineinragen. Bei einer Drehbewegung der Achsaufnahme relativ zur ersten Kulissennut, d. h. des ersten Glieds relativ zum zweiten Glied, kann das Abdeckschott damit u. a. mittels der Nase sowohl radial als auch in den azimutalen Umlaufrichtungen in der Öffnung gehalten werden. Dadurch bewegt sich das Abdeckschott jedenfalls mit der Achsaufnahme, also mit dem ersten Glied, mit. Somit kann folglich die Hubbewegung in einer vertikalen Richtung formschlüssig mittels der im definierten Winkelbereich reduzierten Tiefe der Kulissennut über das Abdeckschott auf das erste Glied übertragen werden.

Auch kann das Abdeckschott den oben erwähnten Spalt konstant abdecken, der sich ja beispielsweise bei einer Relativbewegung zwischen dem Gehäuse und dem ersten Glied verändern kann. Z. B. würde sich der Spalt immer dann vergrößern oder verkleinern, wenn das erste Glied zur Höhenverstellung des Gerätehalters eingesetzt wird, d. h. also parallel zu einer Drehlagerachse bewegt bzw. verfahren wird.

Hierzu kann das Abdeckschott vorzugsweise eine Abdeckfläche umfassen, die den besagten Spalt flächig abdeckt. Dabei kann zumindest eine Federkraft, die ja von der gefederten

Lagerung ausgeht, in Richtung einer Längsstrebe des ersten Glieds wirken. D. h. bevorzugt kann die Abdeckfläche durch eine Feder bzw. die gefederte Lagerung konstant von der Querstrebe weg in Richtung der Längsstrebe gedrückt werden, um den anderenfalls dazwischen entstehenden Spalt stetig geschlossen zu halten.

Grundsätzlich kann die Form des abzudeckenden Spalts die Form der Abdeckfläche vorgeben. Besonders bevorzugt kann die Abdeckfläche dann gebogen sein bzw. eine gebogene, den Spalt abdeckende Oberfläche aufweisen, wenn der abzudeckende Spalt ebenfalls rund bzw. kreisförmig ist.

Ganz besonders bevorzugt kann das Abdeckschott an einer gefederten Seite, nämlich der Seite, an der die Feder auf das Abdeckschott wirkt, auch den Kulissenstein bzw. die Nase aufweisen. Dazu kann beispielsweise parallel zur Nase des Abdeckschotts zumindest eine einfache Spiralfeder angeordnet sein, die den oben erwähnten Spalt konstant, insbesondere entgegen der am Abdeckschott wirkenden Schwerkraft, geschlossen hält. Neben dieser Spiralfeder kann das Abdeckschott mit seiner Nase durch einen geeigneten Durchbruch in der dazwischen befindlichen Achsaufnahme in die erste Kulissennut hineinragen und in derselben geführt sein.

Die gefederte Lagerung sorgt dafür, dass das Abdeckschott in Richtung des ersten Glieds gedrückt wird und damit der Spalt zwischen dem Gehäuse und dem ersten Glied dennoch abgedeckt bzw. geschlossen bleibt. D. h. das Abdeckschott kann also durch die gefederte Lagerung in einer Position gehalten werden, in der es nicht zwangsläufig mit der Kulissennut in Kontakt steht. Zumindest wenn sich dann allerdings das erste Glied im Sicherheitsbereich um einen Kollisionsbereich befindet, wird das Abdeckschott durch Wirkung der Kulissennut zwangsgeführt parallel zur Drehlagerachse bewegt, da der oben erwähnte Hub formschlüssig erzwungen wird. Bevorzugt kann die Feder bzw. gefederte Lagerung ständig vorgespannt sein.

Damit erfüllt das Abdeckschott eine Doppelfunktion. Es kann also nicht nur das Einklemmen von Fingern oder dergleichen an der Gelenköffnung bzw. dem Spalt zwischen dem Gehäuse und dem ersten Glied bzw. einem Teil des ersten Glieds, nämlich einer der Längsstreben verhindern, sondern auch einer Kollision der beiden Glieder in seiner Funktion als Kulissenstein automatisch vorbeugen.

Bevorzugt kann das Abdeckschott, um eine besonders gute und dauerhafte Abdeckung zu erzielen, mittels der gefederten Lagerung stets an der Längsstrebe anstehen. Bevorzugt kann die Abdeckfläche parallel, besonders bevorzugt konzentrisch oder koaxial parallel zu einer Querstrebe des ersten Glieds angeordnet sein und mit einer zur Längsstrebe weisenden, vorzugsweise abgeschrägten, Kante, Fase oder Schrägkante bzw. Kopfseite der Abdeckfläche an der Längsstrebe anstehen.

Damit sorgt unter anderem die Federung dafür, dass das Abdeckschott immerzu in Kontakt mit der Längsstrebe steht. Damit ist überhaupt gar kein Spalt vorhanden, in den Finger oder dergleichen geraten können. Beispielsweise kann so bei einem höhenverstellbaren Parallelogramm-Gelenk bzw. Glied der "Spalt", also die Gelenköffnung zwischen der Längsstrebe und der Achsaufnahme der Querstrebe des Parallelogramm-Gelenks des ersten Glieds dauerhaft geschlossen gehalten werden.

Für die Ausgestaltung des oben erwähnten höhenverstellbaren, ersten Glieds gibt es weitere Möglichkeiten.

Vorzugsweise können die Längsstreben des Doppelarms des höhenverstellbaren Glieds quer zur Längsrichtung verlaufende Bohrungen bzw. jeweils eine Art "Befestigungslasche" an den weiter voneinander entfernten Endabschnitten der Längsstreben aufweisen. Mit diesen Bohrungen können die Längsstreben besonders einfach zusammen mit jeweils einem später näher erläuterten Verbindungsbolzen als Gelenk mit den Querstreben beweglich verbunden werden.

Vorzugsweise können die Querstreben zwei baugleiche, jedoch zueinander gegensätzlich angeordnete, zylinderförmige Drehzapfen aufweisen, die jeweils zwei durchgängige, senkrecht zur Längsrichtung verlaufende Achslagerlöcher in den Drehzapfen umfassen. In diesen Achslagerlöchern kann beispielsweise jeweils einer der genannten Verbindungsbolzen angeordnet sein, der - jeweils durch die besagten Bohrungen in den Längsstreben - die Längsstreben unter Bildung eines Parallelogramms gelenkig relativ zu den Querstreben verbindet bzw. lagert.

Die Gelenke bzw. gelenkigen Verbindungen zwischen den Längsstreben und den Querstreben können dann jeweils einfach realisiert sein, indem durch die oben erwähnten Bohrungen in den Längsstreben und den Achslagerlöchern in den Querstreben des Doppelarms des ersten Glieds jeweils ein Verbindungsbolzen, beispielsweise ein einfacher Stahlbolzen, verläuft. Die drehbare Lagerung der Längsstreben um die in den Drehzapfen befindlichen, senkrecht zu den Drehzapfen verlaufenden Verbindungsbolzen sorgt hierbei dafür, dass sich das erste Glied, insbesondere ein durch den Gerätehalter zu haltender Monitor, heben oder senken lässt.

Jedes der genannten Drehlager kann vorzugsweise aus einer Hülse und einem entsprechenden, darin drehbaren Zapfen gebildet werden. Besonders bevorzugt kann der hülsenförmige Teil des Drehlagers exakt auf einen der oben erwähnten Drehzapfen abgestimmt sein. Ganz besonders bevorzugt können weitere Drehlager eine solche Hülse aufweisen, die auch ein entsprechendes Pendant der genannten Drehzapfen mit oder ohne Gabelgelenk bzw. Gelenke aufnehmen kann.

Auch für die sonstige Ausgestaltung des oben erwähnten Gerätehalters, insbesondere der Gelenkanordnung des Gerätehalters, gibt es unterschiedliche Möglichkeiten.

Vorzugsweise kann dabei einer der Endabschnitte des zweiten Glieds so ausgebildet sein, dass er sich jeweils mit dem anderen Teil des Drehlagers des ersten Glieds drehbar verbinden lässt.

Der horizontale Arm des zweiten Glieds kann u. a. einfach nur für eine horizontale Verlängerung sorgen. D. h. es kann z. B. ein Abstand zwischen Benutzer und Basisteil damit überbrückt werden oder unter Zusammenwirken mit dem dazu drehbar gelagerten ersten Glied ein Abstand genauer justiert werden. Wie bereits oben erwähnt, dient dann das erste Glied zusätzlich auch zur Höhenverstellung des Monitors.

Da die einzelnen Glieder jeweils gelenkig verbunden sind, lassen sich sämtliche Glieder relativ zueinander im Wesentlichen beliebig bewegen. Damit eine Kollision der Glieder der Gelenkanordnung, insbesondere eines oder mehrerer zu haltender Monitore vermieden wird, können zumindest einzelne Gelenke der Gelenkanordnung vorzugsweise auf bestimmte Winkelbereiche beschränkt sein. Z. B. können die verbindenden Drehlager zwischen Basisteil und zweitem Glied und/oder Ankupplungsteil und erstem Glied auf einen maximal zulässigen Drehwinkel, z. B. einen 200°-Drehwinkel, in der Horizontalen durch Anschläge am zweiten und/oder dritten Drehlager geeignet beschränkt sein, wenn das Basisteil beispielsweise an einer Wand oder einem Tisch befestigt ist, wie oben bereits erläutert wurde.

Die "Drehwinkel-Beschränkung" ist aber nicht auf die genannten Drehlager beschränkt. Vorzugsweise könnte auch das erste Drehlager zwischen dem ersten und dem zweiten Glied auf einen definierten Winkelbereich eingeschränkt sein, in dem sich z. B. die erste Kulissennut nur über den definierten Winkelbereich erstreckt und an den Enden beispielsweise die oben beschriebenen Anschläge ausgebildet sind.

Vorzugsweise kann der Gerätehalter - zumindest werksseitig, aber auch durch einen Monteur oder einen Benutzer vor Ort - mit unterschiedlichen Basisteilen ausgestattet werden. Sie können jeweils zur Kopplung mit einem nächsten Glied der Gelenkanordnung eine identische Schnittstelle, z. B. ein Drehlagerteil (beispielsweise die erwähnte Hülse) aufweisen, aber eine verschiedene, jeweils zur Kopplung an das gewünschte Bezugsobjekt - beispielsweise einen Tisch, eine Wand, einen Boden oder dergleichen - angepasste Schnittstelle aufweisen. D. h. das Basisteil kann als Wandhalterung, als Bodenständer, als Tischklemme oder dergleichen ausgebildet sein oder auch mit einer Tischklemme koppelbar sein.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Die Figuren sind in der Regel nicht maßstäblich. Relative Richtungsangaben wie "oben", "unten", "vertikal", "horizontal", "innenseitig", "außenseitig", "vorderseitig", "rückseitig", "längsseitig" etc. beziehen sich hier in den Figuren auf einen für einen bestimmungsgemäßen Gebrauch an einer Tischplatte angebrachten Gerätehalter. Es zeigen:
Figur 1 eine perspektivische Rückansicht auf einen Monitor, welcher durch ein Ausführungsbeispiel eines erfindungsgemäßen Gerätehalters gehalten wird, bevor er in einen Sicherheitsbereich um einen Kollisionsbereich bewegt wird,
Figur 2 eine perspektivische Rückansicht des Gerätehalters nach Figur 1, der erfindungsgemäß aus einem Sicherheitsbereich um einen Kollisionsbereich bewegt worden ist,
Figur 3 eine Sprengzeichnung einer Teilansicht des Gerätehalters nach Figur 1 mit teilweise entfernter Verkleidung zur Darstellung eines Aufbaus eines bevorzugten Ausführungsbeispiels einer Hubmechanik mit einem Ausführungsbeispiel eines erfindungsgemäßen Abdeckschotts,
Figur 4 eine perspektivische Ansicht eines Ausführungsbeispiels eines erfindungsgemäßen Abdeckschotts des Gerätehalters nach Figur 1,
Figur 5 eine perspektivisch dargestellte Ansicht einer Schnittfläche, entlang der Schnittlinie gemäß Figur 4,
Figur 6 eine perspektivisch dargestellte Ansicht der Schnittfläche, entlang der Schnittlinie gemäß Figur 1,
Figur 7 eine perspektivische Ansicht auf einen Abschnitt eines Ausführungsbeispiels einer Gelenkanordnung des Gerätehalters nach Figur 1.

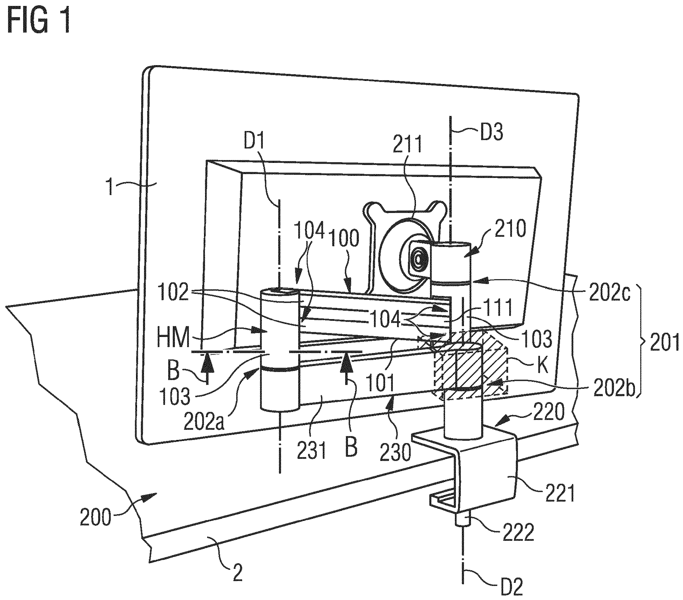

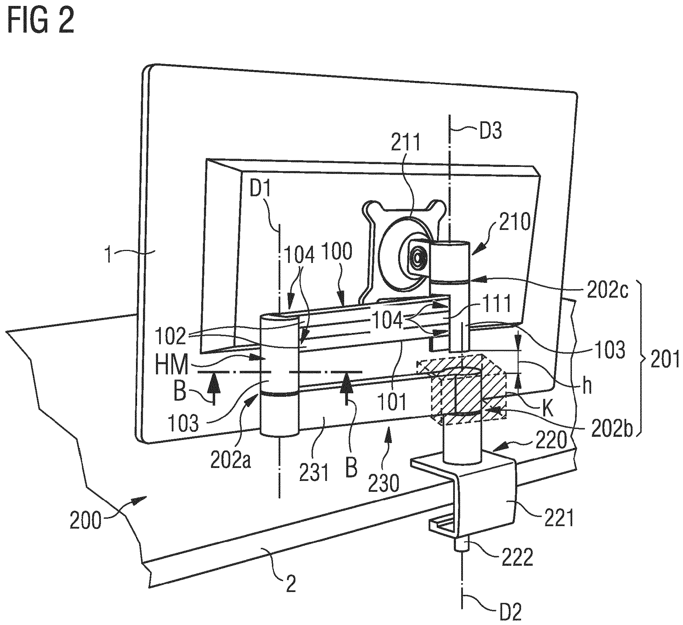

Anhand der Figuren 1 und 2 wird zunächst ein Ausführungsbeispiel eines erfindungsgemäßen Gerätehalters 200 mit einem nicht dargestellten Ausführungsbeispiel eines erfindungsgemäßen Abdeckschotts 240 beschrieben, wobei ein höhenverstellbares, erstes Glied 100 einer Gelenkanordnung 201 des Gerätehalters 200 in Figur 1 vor der Bewegung in einen weiter unten noch erläuterten Sicherheitsbereich um einen Kollisionsbereich K gezeigt ist und sich in Figur 2 weiterhin außerhalb des Sicherheitsbereichs um einen Kollisionsbereich K befindet.

Wie aus den Figuren 1 und 2 hervorgeht, gehört neben dem zuvor erwähnten ersten Glied 100 zu den Hauptkomponenten des Gerätehalters 200 ein zweites Glied 230 der Gelenkanordnung 201 mit einem länglichen starren Arm 231. Weiter umfasst der Gerätehalter 200 ein Ankupplungsteil 210, welches einen Adapter nach VESA-Norm bzw. eine VESA-Halterung 211 für einen Monitor 1 umfasst. Ferner gehört dazu ein Basisteil 220, das eine Tischklemme 221 als Anordnungsvorrichtung aufweist, um den Gerätehalter 200 insgesamt, wie hier gezeigt, an einer Tischplatte 2 zu montieren.

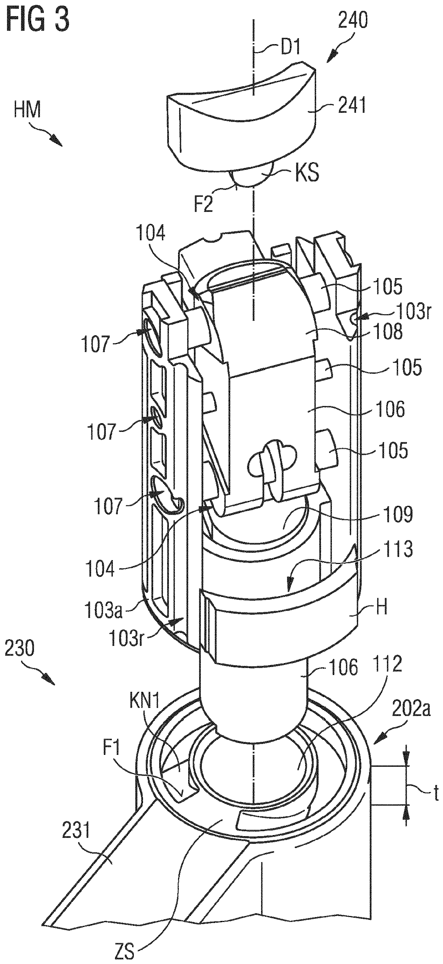

Der durch den Gerätehalter 200 gehaltene Monitor 1 - ebenso wie die Tischplatte 2 als Bezugsobjekt - sind zu Anschauungszwecken dargestellt. Sämtliche Hauptkomponenten sind jeweils über ein Drehlager 202a, 202b, 202c miteinander verbunden und drehbar um eine jeweils vertikal ausgerichtete Drehlagerachse D1, D2, D3 des betreffenden Drehlagers 202a, 202b, 202c zueinander gelagert, wie dies anhand einer Sprengzeichnung gemäß Figur 3 in einem Ausschnitt mit Fokus auf das erste Drehlager 202a des Gerätehalters 200 beispielhaft gezeigt ist.

Das höhenverstellbare, erste Glied 100 des Gerätehalters 200 dient dazu, Bewegungen des gehaltenen Geräts 1, hier des Monitors 1, in einer Vertikalrichtung, also nach oben bzw. unten, relativ zum Basisteil 220 zu ermöglichen. Zugleich sorgen die zahlreichen Drehlager 202a, 202b, 202c dafür, dass sich der Monitor 1 auch in einer horizontalen Ebene drehen bzw. verfahren lässt. Zudem sorgt das zweite Glied 230 für eine zusätzliche Verlängerung des Gerätehalters 200 in einer Horizontalrichtung, hier z. B. parallel zur Tischplatte 2.

An das Ankupplungsteil 210, das an einer Seite den Monitor 1 hält, schließt sich an der anderen Seite - drehbar über ein drittes Drehlager 202c verbunden - das erste Glied 100 an. Das erste Glied 100 weist hierzu einen Doppelarm 101 mit zwei voneinander beabstandeten Längsstreben 102 und zwei die Längsstreben 102 endseitig gelenkig verbindende, wesentlich kürzere Querstreben 106 bzw. Drehzapfen 106 auf (siehe Figur 3). Die Querstreben 106 umgibt dabei eine Querstrebenabdeckung bzw. Abdeckhülse 103. Zusammen bilden die Längsstreben 102 und die Querstreben 106 dabei ein Parallelogramm mit vier Gelenken 104.

Beispielsweise lässt sich also mittels der das Basisteil 220 mit dem Ankupplungsteil 210 koppelnden Gelenkanordnung 201 des Gerätehalters 200 durch eine parallele Drehung der Längsstreben 102 des Doppelarms 101 um die Gelenkachsen der Gelenke 104 ein erster Drehzapfen 106 des ersten Glieds 100 relativ zum anderen Drehzapfen 106 nach oben bzw. unten bewegen. Nachdem also der Monitor 1 bzw. ein Gerät 1 in einer Vertikalrichtung nach unten, d. h. in Richtung des Basisteils 220 bewegt wurde, befindet sich zumindest ein Teil desselben oder lediglich das erste Glied 100 in einem Sicherheitsbereich um den Kollisionsbereich K (siehe Figur 1). Der "Kollisionsbereich K" definiert den Bereich, in welchem sich das erste Glied 100 bei einer Drehbewegung auf einem potentiellen Kollisionskurs befindet, so dass es unter Fortsetzung der Bewegung zu einer Kollision kommen würde. D. h. dass sich z. B. bei einer aus dieser Position heraus ausgeführten, rein horizontalen Drehbewegung (um die Drehlagerachse D1 des betreffenden ersten Drehlagers 202a) des ersten Glieds 100 relativ zum zweiten Glied 230 ein Zusammenstoß der Glieder 100, 230 ereignen würde. Mit dem Sicherheitsbereich wird daher ein erweiterter, definierter Umgebungsbereich um den Kollisionsbereich K des Gerätehalters 200 definiert, wobei im Sicherheitsbereich ein kollisionsvermeidender Kurs des ersten Glieds 100 um den Kollisionsbereich herum erzwungen wird.

Um u. a. den Monitor 1 mittels einer einen Hub h (siehe Figur 2) erzeugenden Hubmechanik HM aus dem Sicherheitsbereich um den Kollisionsbereich K gemäß Figur 1 in einen Bereich außerhalb des Sicherheitsbereichs um den Kollisionsbereich K gemäß Figur 2 zu bewegen, umfasst der Gerätehalter 200 deshalb erfindungsgemäß eine Hubmechanik HM, wie noch anhand von Figur 3 erläutert wird.

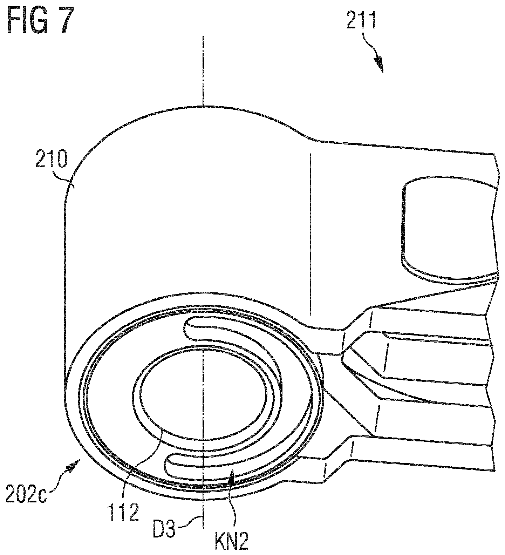

An einer vom Ankupplungsteil 210 wegweisenden Seite des ersten Glieds 100 ist das zweite Glied 230 drehbar gekoppelt angeordnet. Dabei ist das zweite Glied 230, das im Wesentlichen aus einem länglichen starren Arm 231 besteht, an diesem zum ersten Glied 100 weisenden Ende des Arms 231 über das erste Drehlager 202a mit dem ersten Glied 100 verbunden. An einem entgegengesetzten Ende ist das zweite Glied 230 schließlich über ein zweites Drehlager 202b mit dem Basisteil 220 gekoppelt. Damit sich das zweite Glied 230 nur in einem beschränkten Winkelbereich direkt oberhalb der Tischplatte 2 bewegen lässt, ist das zweite Drehlager 202b mit einer hier nicht dargestellten zweiten Kulissennut KN2 ausgebildet, wie anhand von Figur 7 noch erläutert wird.

Figur 3 zeigt beispielhaft einen Ausschnitt dreier Komponenten der Gelenkanordnung 201 in einer Sprengzeichnung. Die betreffenden drei Komponenten der Gelenkanordnung 201 bilden dabei zusammengesetzt die Hubmechanik HM, deren Funktionsweise bzw. Zusammenwirken allerdings besser anhand der Sprengzeichnung zu erkennen ist.

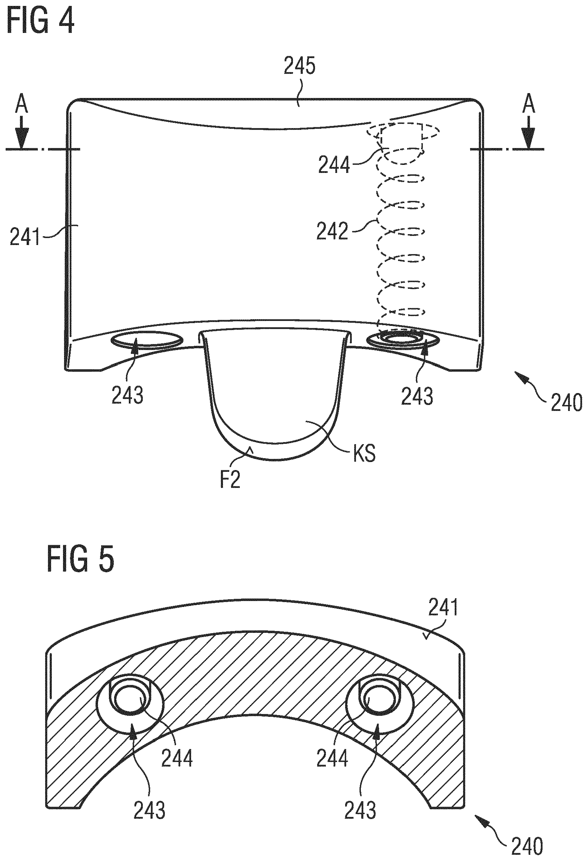

Eine erste Komponente der Hubmechanik HM - hier in Figur 3 unten - bildet eine erste Kulissennut KN1, die sich am zweiten Glied 230 im Bereich des ersten Drehlagers 202a um eine runde Innenhülse 112 erstreckt. Die Tiefe t der ersten Kulissennut KN1 reduziert sich ausgehend von einem Maximum in beiden azimutalen Umlaufrichtungen bis zu einem Minimum der Kulissennut ZS, d. h. einem Plateau, bzw. einer zentralen Stellung ZS. Eine zweite Komponente der Hubmechanik HM, die auf einer abschnittsweise schrägen Flanke F1 der ersten Kulissennut KN1 mit ihrer Flanke F2 zwangsgeführt gleitet, bildet ein Kulissenstein KS (in Figur 4 und 5 einzeln dargestellt), der hier - in Figur 3 oben - konkret als Abdeckschott 240 ausgebildet ist. Die zwei Komponenten bzw. Elemente KN1, KS sind also kinematisch gekoppelt. Eine dritte Komponente, die sich zumindest z. T. zwischen den beiden Komponenten befindet und hier für die Gleitbewegung des Kulissensteins KS in der ersten Kulissennut KN1 sorgt, bildet schließlich ein die Querstrebe 106 des ersten Glieds 100 umgebender Teil, nämlich eine Achsaufnahme 103a mit einem das Abdeckschott 240 in montiertem Zustand seitlich bzw. in sämtlichen Horizontalrichtungen einfassenden Gehäuse H. Unter den Horizontalrichtungen sind, bezogen auf die Drehlagerachse D1, die radialen und azimutalen Richtungen gemeint.

Wie hierbei auch zu sehen ist, ist die längliche Querstrebe bzw. der Drehzapfen 106 des ersten Glieds 100 im Wesentlichen zylinderförmig ausgebildet und vertikal bzw. senkrecht angeordnet. Die Querstrebe 106 sitzt dabei im montierten Zustand, so in der passenden Innenhülse 112 des zweiten Glieds 230, dass sie zusammen mit der Innenhülse 112 das oben bereits erwähnte Drehlager 202a bildet. Es koppelt also das zweite Glied 230 drehbar mit dem ersten Glied 100.

Wie erwähnt, umgibt dabei die z. T. beabstandete, gabelförmige Achsaufnahme 103a den Drehzapfen 106. In der erwähnten Querstrebe 106 sind in einer vertikalen Richtung drei voneinander beabstandete Achslagerlöcher 107 ausgebildet. In den drei Achslagerlöchern 107 verläuft jeweils ein Anschlussbolzen 105 senkrecht durch die Querstrebe 106 hindurch, der jeweils auf beiden Seiten außenseitig (hier in Figur 3 nach links bzw. rechts) absteht und sich in entsprechenden Achslagerlöchern 107 der Achsaufnahme 103a fortsetzt. Dort, wo der obere und der untere Anschlussbolzen 105 zwischen der Achsaufnahme 103a und dem innenliegenden Drehzapfen 106 freiliegen, verlaufen im montiertem Zustand die beiden, beispielsweise in Figur 1 dargestellten, länglichen, u-profilförmigen Längsstreben 102. Längsseitig dazwischen verlaufen die beiden seitlichen Verkleidungen bzw. Blenden 111, die mittels des mittleren, relativ dazu kleineren Anschlussbolzens 105 gehalten werden. In Endabschnitten der Schenkelseiten der U-Profilschienen bzw. u-profilförmigen Längsstreben befinden sich dabei die parallel zur U-Grundseite der U-Profilschienen durch beide Schenkelseiten durchgängig verlaufenden Achslagerlöcher 107, durch die wie zuvor erwähnt jeweils einer der anderen, größeren Verbindungsbolzen 105 verläuft.

Damit die Längsstreben 102, wie aus einer Abfolge der Figuren 1 und 2 entnommen werden kann, über einen größeren Bereich in der Höhe verstellt werden können, weist der Drehzapfen 106 (relativ zu dem die Längsstreben 102 drehbar um eine betreffende Gelenkachse der Gelenke 104 gelagert sind, und in welche sie z. T. hineinragen) daher an der Oberseite Abrundungen bzw. Abschrägungen 108 auf. Zugleich sind auch die Längsstreben 102 endseitig im Bereich um diese Achslagerlöcher 107 an den Endabschnitten an den Ecken abgerundet. Dadurch lassen sich die endseitig abgerundeten Längsstreben 102 leicht über die Abrundungen 108 "hinwegdrehen". Genauer gesagt ermöglichen diese Abrundungen 108, dass sich das erste Glied 100 deutlich weiter nach oben bzw. unten bewegen lässt. Da es sich um zwei übereinander befindliche Längsstreben 102 handelt, weist die Querstrebe 106 mittig ebenfalls eine demselben Zweck dienliche Ausnehmung bzw. Auskerbung 109 auf, die somit den notwendigen Bewegungsspielraum zwischen den Streben 102, 106 erweitert. Die untere der beiden Längsstreben 102 kann dadurch zumindest z. T. in die Querstrebe 106 hineingedreht werden, so dass sich insgesamt das erste Glied 100 über einen größeren Bereich in der Höhe verstellen lässt. Die zweite, hier nicht dargestellte Querstrebe 106, die sich an einem anderen Ende in Längsrichtung des ersten Glieds 100 befindet, kann vorzugsweise analog ausgebildet, aber umgekehrt angeordnet sein.

Unter Zusammenwirken zumindest der drei oben genannten Komponenten im Rahmen einer Drehbewegung um die Drehlagerachse D1 des ersten Drehlagers 202a wird der Kulissenstein KS in der Kulissennut KN1 mittels der verringerten Tiefe der Kulissennut KN1 auf das Plateau bzw. in die zentrale Stellung ZS hochgeführt. Damit drückt ein kulissensteinabgewandtes Ende 245 (siehe Figur 3) des Abdeckschotts 240 an einem zum Drehpunkt des Gelenks 104 beabstandeten Abschnitt einer der Längsstreben 102 gegen die untere Längsstrebe 102, wodurch sich ein Hebel ergibt. Der Hebel bewirkt, dass ein kleiner Hub, der mit der Tiefe t der Kulissennut KN1 relativ zur zentralen Stellung ZS korreliert, in einen relativ dazu größeren Hub h umgesetzt wird, so dass der Monitor 1 bzw. ein Teil des ersten Glieds 100 aus dem Sicherheitsbereich um den Kollisionsbereich K bewegt wird.

Figur 4 zeigt das bereits oben erwähnte Abdeckschott 240 einzeln mit Blick auf eine gebogene, im Wesentlichen rechteckige, Abdeckfläche 241. Die Abdeckfläche 241 deckt im fertig montierten Zustand einen Spalt S zwischen dem Gehäuse H und einer der Längsstreben 102 des ersten Glieds 100 ab. In diesem ersten Glied 100 (als Teil desselben) aus Figur 1 kann der dort nicht sichtbare Kulissenstein KS auch konkret als erfindungsgemäßes Abdeckschott 240 ausgebildet sein, wie es hier und in Figur 5 dargestellt ist. Dabei ist das Abdeckschott 240 sowohl zur Erzeugung eines Hubs h als auch zur Abdeckung eines Spalts S entsprechend am ersten Glied 100 angeordnet.

An einer zur Abdeckfläche 241 angrenzenden, hier in Figur 4 unteren, Stirnseite des Abdeckschotts 240 befindet sich die oben erwähnte abgerundete Nase bzw. der eigentliche Kulissenstein KS. Der Kulissenstein KS steht hier senkrecht nach unten ab und weist eine abgerundete bzw. abgeschrägte Form auf, die wie eine "Zunge" aussieht. Im montierten Zustand gleitet das Abdeckschott 240 mit dem Kulissenstein KS zwangsgeführt entlang einer Kulisse, z. B. in der in Figur 3 gezeigten ersten Kulissennut KN1.

Ebenfalls an dieser Stirnseite sind einfache Sacklöcher 243 - hier beidseitig des Kulissensteins KS - parallel zur Abdeckfläche 241 ausgebildet, die sich innenseitig im Abdeckschott 240 ein Stück weit in Richtung der gegenüberliegenden Stirnseite fortsetzen. Sie sind dafür vorgesehen jeweils zumindest eine gefederte Lagerung 242, hier konkret eine Spiralfeder 242 in sich aufzunehmen.

Außenseitig an der gegenüberliegenden Stirnseite befindet sich eine schräge Kante bzw. Schrägkante 245, die später mit einer der Längsstreben kontinuierlich - zumindest teilweise - in Kontakt steht, so dass jedenfalls der besagte Spalt stets geschlossen bleibt. Sie erschwert außerdem ein theoretisch mögliches Einklemmen im Spalt zwischen dem Abdeckschott und der Längsstrebe, da sie den ansonsten dort befindlichen kritischen "Eckwinkel" zwischen dem Abdeckschott und der Längsstrebe verdeckt.

Wie anhand von Figur 5 in einem Horizontalschnitt entlang der Schnittlinie AA quer bzw. horizontal durch einen oberen Teil des Abdeckschotts 240 aus Figur 4 zu erkennen ist, befinden sich am tiefsten Punkt der Sacklöcher 243, also hier an einer "Deckenseite" der Sacklöcher 243, von der Deckenseite abstehende Stifte bzw. Zapfen 244. Um die Zapfen 244 ist eine einfache, in die Sacklöcher 243 eingefügte Spiralfeder 242 - wie beispielhaft in einem der Sacklöcher 243 in Figur 4 gezeigt - zwischen einer Innenwand des betreffenden Sacklochs 243 und dem Zapfen 244 angeordnet.

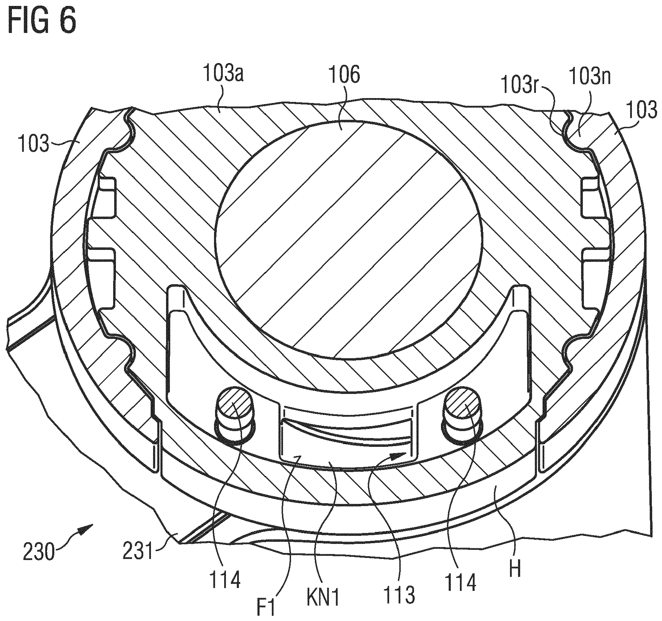

Figur 6 zeigt einen Schnitt entlang der Schnittlinie BB aus Figur 1 quer bzw. horizontal durch die oben erwähnte Querstrebe 106 des ersten Glieds 100. Außen umgibt die Querstrebe 106 dabei die im Wesentlichen kreisförmige bzw. zumindest c-profilförmige Querstrebenabdeckung 103. Weiter innen, d. h. radial nach innen, ist die ebenso oben erwähnte Achsaufnahme 103a angeordnet, die im Querschnitt einen Hohlzylinder bildet. Innerhalb des Hohlzylinders verläuft dann die eigentliche Querstrebe 106 bzw. der zylinderförmige Drehzapfen 106, der in Figur 3 in einer perspektivischen Teilansicht gezeigt ist.

Zur formschlüssigen Kopplung der Querstrebenabdeckung 103 mit der Achsaufnahme 103a, umfassen beide Komponenten formschlüssig ineinander greifende Elemente 103r, 103n. Wie hier in der schrägen Draufsicht auf die im Wesentlichen kreisförmige Schnittfläche zu erkennen ist, handelt es sich hierbei um im Wesentlichen halbkreisförmige Führungsnasen 103n der Querstrebenabdeckung 103, die in passgenaue, komplementäre Führungsrillen 103r der Achsaufnahme 103a greifen. Die eigentliche Längserstreckung einer solchen Führungsrille 103r der Achsaufnahme 103a ist in der perspektivischen Sprengzeichnung in Figur 3 erkennbar.

Über einen Bereich der Achsaufnahme 103a, hier in Figur 6 in einer unteren Hälfte der Schnittfläche, ist eine Vertiefung in Form eines Abdrucks der kulissensteinseitigen Stirnseite des Abdeckschotts 240 in der Achsaufnahme ausgebildet. In einem mittigen Bereich der Vertiefung, welcher in Form und Größe dem Kulissenstein KS des Abdeckschotts 240 entspricht, ist eine (Durchbruchs-)Öffnung 113 ausgespart, durch welche der Kulissenstein KS des Abdeckschotts, wie bereits erwähnt, in die darunter befindliche erste Kulissennut KN1 hineinragt. Hier in der Figur rechts bzw. links neben der (Durchbruchs-)Öffnung 113 befinden sich formgleich, zu den oben erwähnten Zapfen 244 ausgebildete, in Richtung dieser Zapfen 244 weisende Gegenstifte bzw. Gegenzapfen 114, die nach oben abstehen und eine entsprechende (Gegen-)Aufnahme für die Spiralfedern 242 bilden.

Wie erwähnt ist in den Figuren 3 und 6 auch zu sehen, dass der Drehzapfen 106 durch die Achsaufnahme 103a in Form der geschlitzten bzw. c-förmigen Abdeckhülse 103 als äußere Verkleidung umgeben ist. Dabei ragen die hier jeweils nicht dargestellten Längsstreben nämlich eigentlich aus diesem "Schlitz" der Abdeckhülse 103 hinaus, der sich in Figur 3 und gedacht in Figur 6 oberhalb des Gehäuses H zwischen den beiden rechts und links befindlichen C-Enden der Abdeckhülse 103 befindet.

Bei einer Montage könnte die Abdeckhülse 103, beispielsweise von oben gemäß Figur 3, in einem abschließenden Montageschritt formschlüssig auf die Achsaufnahme 103a geschoben werden, so dass die Führungsnasen 103n in den Führungsrillen 103r angeordnet sind und die Längsstreben 102 durch den oben beschriebenen Schlitz verlaufen. Nach diesem Montageschritt wird oberseitig eine geeignete Abschlusshülse bzw. Abdeckung auf die Querstrebe 106 gesteckt.

Wie beispielhaft anhand eines dritten Drehlagers 202c gemäß Figur 7 gezeigt, ist in den Drehlagern 202b, 202c eine zweite Kulissennut KN2 ausgebildet. Die zweite Kulissennut KN2 besitzt in ihrem Verlauf eine gleichbleibende Tiefe. Sie erstreckt sich dabei nur über ein Kreissegment eines Vollkreises des dritten Drehlagers 202c. In der zweiten Kulissennut KN2 ist dann ein einfacher, nicht dargestellter Stift geführt, der formschlüssig entlang bzw. in der Kulissennut KN2 gleitet. Am Ankupplungsteil 210 erstreckt sich die zweite Kulissennut KN2 z. B. entlang einer Hälfte eines Vollkreises einer Innenhülse 112, die wie erwähnt den hier nicht dargestellten Drehzapfen 106 des ersten Glieds 100 aufnimmt. Beim dritten Drehlager 202c ist die zweite Kulissennut KN2 entsprechend nur in einem zur VESA-Halterung 211 zeigenden 200° Kreissegment um die Drehlagerachse D3 des dritten Drehlagers 202c ausgebildet. Das übrige Kreissegment ist jeweils einfach flach bzw. eben, d. h. ohne Vertiefung, so dass der in der zweiten Kulissennut KN2 geführte, hier nicht gezeigte, Stift am jeweiligen Ende des Kreissegments bzw. der zweiten Kulissennut KN2 anschlägt. Beispielsweise würde er dann anschlagen, bevor das Ankupplungsteil 210 relativ zum ersten Glied 100 oder das zweite Glied 230 relativ zum Basisteil 220 über den jeweiligen vorgegebenen Winkelbereich hinaus bewegt werden würde. Die zweite Kulissennut KN2 in Figur 7, die der Einfachheit halber beispielhaft an einem zum dritten Drehlager 202c weisenden Ende des Ankupplungsteils 210 gezeigt ist, kann wie erwähnt gleichermaßen im zweiten Drehlager 202b, insbesondere allerdings auch in einer entsprechend angepassten Form im ersten Drehlager 202a, ausgebildet sein.

Insgesamt ist somit also ein Bewegungsradius des Gerätehalters 200 eingeschränkt, so dass z. B. das zweite Glied 230 hier vorteilhafterweise nicht gegen eine an einer rückseitigen Seite des Monitors 1 befindliche - nicht dargestellte - Wand stoßen kann. Gleicherma-ßen kann auch entsprechend der Bewegungsradius des Ankupplungsteils 210 so auf einen definierten Winkelbereich eingeschränkt werden, dass ein am Ankupplungsteil 210 angebrachter Monitor 1 vorteilhafterweise nicht gegen einen Teil des Gerätehalters 200 stoßen kann.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So kann der Gerätehalter auch so ausgebildet sein, dass er mehr als ein Gerät, insbesondere mehrere Monitore, vorzugsweise jeweils mit einer erfindungsgemäßen Hubmechanik, halten kann. Ebenso können Details der Konstruktion modifiziert werden. Beispielsweise sind die gezeigten kinematisch gekoppelten Elemente untereinander beliebig austauschbar und/oder kombinierbar. Z. B. könnten sich die beschriebene zweite Kulissennut und der dazugehörige Stift am jeweils anderen Element befinden. Zudem können beispielsweise auch andere Basisteile als die beschriebene Anordnungsvorrichtungen verwendet werden. Weiterhin schließt die Verwendung der unbestimmten Artikel "ein" bzw. "eine" nicht aus, dass die betreffenden Merkmale auch mehrfach vorhanden sein können. Beispielsweise könnte die beschriebene Hubmechanik mehrfach vorhanden sein, also insbesondere ein weiteres Mal zwischen Basisteil und zweitem Glied ausgebildet sein. Dadurch könnte ein an einer Tischplatte geklemmter Gerätehalter, der zuvor nach hinten unterhalb der Tischplatte verfahren bzw. gedreht worden ist, bei einer entgegengesetzten Drehbewegung kollisionsfrei, vorzugsweise automatisch, nach oben über die Tischplatte geschwenkt werden. Ebenso schließt der Begriff "Anordnung" nicht aus, dass die betreffende Komponente aus mehreren zusammenwirkenden Teilkomponenten besteht, die gegebenenfalls auch räumlich verteilt sein können.
- AA: Schnittlinie
- BB: Schnittlinie
- D1, D2, D3: Drehlagerachsen
- F1, F2: Flanken
- h: Hub
- H: Gehäuse
- HM: Hubmechanik
- K: Kollisionsbereich
- KS: Kulissenstein / Nase
- KN1: erste Kulissennut
- KN2: zweite Kulissennut
- S: Spalt
- t: Tiefe
- ZS: Zentrale Stellung / Minimum der Kulissennut

## Patentansprüche

1. Gerätehalter (200), vorzugsweise für einen zu haltenden Monitor (1), mit
- einem Basisteil (220) zur Anordnung an einem Bezugsobjekt (2),
- einem Ankupplungsteil (210) zur Ankupplung eines zu haltenden Geräts (1),
- einer das Basisteil (220) und das Ankupplungsteil (210) koppelnden Gelenkanordnung (201), welche zumindest ein höhenverstellbares, erstes Glied (100), ein erstes Drehlager (202a), in dem das erste Glied (100) um eine Drehlagerachse (D1) drehbar gelagert ist, und eine Hubmechanik (HM) umfasst, die bei einer Drehbewegung des ersten Glieds (100) um die Drehlagerachse (D1) in einem vorgegebenen Winkelbereich des ersten Drehlagers (202a) einen Hub (h) parallel zur Drehlagerachse (D1) bewirkt, zumindest wenn sich das erste Glied (100) in einem Sicherheitsbereich um einen potentiellen Kollisionsbereich (K) befindet.

2. Gerätehalter nach Anspruch 1, wobei die Hubmechanik (HM) zwei kinematisch gekoppelte Elemente (KN1, KS) mit je einer Flanke (F1, F2) umfasst, welche Elemente (KN1, KS) bei der relativen Drehbewegung mittels eines Gleitens der Flanken (F1, F2) der beiden Elemente (KN1, KS) den Hub (h) formschlüssig erzwingen.

3. Gerätehalter nach Anspruch 2, wobei die Hubmechanik (HM) den Hub (h) erzeugt, indem eines der kinematisch gekoppelten Elemente (KS) ein Drehmoment auf das erste Glied (100) ausübt.

4. Gerätehalter nach Anspruch 2 oder 3, wobei zumindest die Flanke (F1, F2) eines der Elemente (KN1, KS) eine Schräge aufweist.

5. Gerätehalter nach einem der vorstehenden Ansprüche, wobei die kinematisch gekoppelten Elemente (KN1, KS) als eine im Wesentlichen kreisförmige, erste Kulissennut (KN1) und als ein in der Kulissennut (KN1) geführter Kulissenstein (KS) ausgebildet sind.

6. Gerätehalter nach Anspruch 5, wobei die Kulissennut (KN1) im definierten Winkelbereich eine reduzierte Tiefe (t) aufweist.

7. Gerätehalter nach Anspruch 5 oder 6, wobei die Kulissennut (KN1) stufenartig ausgebildet ist.

8. Gerätehalter nach einem der vorstehenden Ansprüche, wobei die Gelenkanordnung (201) ein zweites Glied (230) aufweist, wobei die Hubmechanik (HM), zumindest wenn sich die Glieder (100, 230) in einem gegenseitigen Sicherheitsbereich um einen Kollisionsbereich (K) befinden, eine Kollision der beiden Glieder (100, 230) verhindert.

9. Gerätehalter nach Anspruch 8, mit einer zweiten Kulissennut (KN2), die sich nur über ein, vorzugsweise über maximal 200° erstreckendes, Kreissegment um eine Drehlagerachse (D2, D3) eines entsprechenden zweiten und/oder dritten Drehlagers (202b, 202c) erstreckt, wobei vorzugsweise
- das zweite Drehlager (202b) zwischen einem zweiten Glied (230) und einem Basisteil (220) und
- das dritte Drehlager (202c) zwischen einem ersten Glied (100) und einem Ankupplungsteil (210) angeordnet ist.

10. Gerätehalter nach einem der vorstehenden Ansprüche, mit
- einem Gehäuse (H) und
- einem, vorzugsweise federnd gelagerten, Abdeckschott (240), das stets einen veränderlichen Spalt (S) zwischen dem Gehäuse (H) und dem ersten Glied (100) abdeckt.

11. Gerätehalter nach Anspruch 10, wobei das Abdeckschott (240) eine, vorzugsweise gebogene, Abdeckfläche (241) aufweist, die den Spalt (S) mittels einer gefederten Lagerung (242) abdeckt, wobei zumindest eine Federkraft in Richtung einer Längsstrebe (102) des ersten Glieds (100) wirkt.

12. Gerätehalter nach Anspruch 10 oder 11, wobei das Abdeckschott (240) mittels der gefederten Lagerung (242) stets an der Längsstrebe (102) ansteht.

13. Gerätehalter (200), nach einem der Ansprüche 1 bis 9 und einem der Ansprüche 10 bis 12, wobei das Abdeckschott (240) zugleich als eines der kinematisch gekoppelten Elemente (KS) der Hubmechanik (HM) wirkt.

14. Gerätehalter nach Anspruch 13, wobei das Abdeckschott (240) an einer gefederten Seite einen Kulissenstein (KS) aufweist, welcher in einer entsprechenden Kulissennut (KN1, KN2) zwangsgeführt läuft.

15. Verwendung eines Abdeckschotts (240) zum Schutz gegen Einklemmen in einem Spalt (S) zwischen einer Strebe (102) eines höhenverstellbaren, ersten Glieds (100) und einem Gehäuse (H) eines Gerätehalters (200), wobei das Abdeckschott (240) zur Abdeckung des Spalts (S), vorzugsweise federnd, gelagert ist und/oder zur Kollisionsvermeidung, zumindest wenn sich das erste Glied (100) in einem Sicherheitsbereich um einen potentiellen Kollisionsbereich (K) befindet, wobei eine Hubmechanik (HM) bei einer Drehbewegung des ersten Glieds (100) um die Drehlagerachse (D1) in einem vorgegebenen Winkelbereich eines ersten Drehlagers (202a) einen Hub (h) parallel zur Drehlagerachse (D1) bewirkt.

## Claims

1. Device holder (200), preferably for a monitor (1) to be held, with
- a base part (220) for arrangement on a reference object (2),
- a coupling part (210) for coupling a device (1) to be held,
- a joint arrangement (201) coupling the base part (220) and the coupling part (210), which comprises at least one height-adjustable first member (100), a first pivot bearing (202a), in which the first member (100) is mounted rotatably about a pivot bearing axis (D1), and a stroke mechanism (HM), which causes a stroke (h) parallel to the pivot bearing axis (D1) during a rotary movement of the first member (100) about the pivot bearing axis (D1) in a predetermined angular range of the first pivot bearing (202a), at least when the first member (100) is located in a safety range around a potential collision range (K).

2. Device holder according to claim 1, wherein the stroke mechanism (HM) comprises two kinematically coupled elements (KN1, KS) each having a flank (F1, F2), which elements (KN1, KS) force the stroke (h) in a positive-locking manner during the relative rotary movement by means of a sliding of the flanks (F1, F2) of the two elements (KN1, KS).

3. Device holder according to claim 2, wherein the stroke mechanism (HM) generates the stroke (h) by one of the kinematically coupled elements (KS) exerting a torque on the first member (100).

4. Device holder according to claim 2 or 3, wherein at least the flank (F1, F2) of one of the elements (KN1, KS) has a slant.

5. Device holder according to one of the preceding claims, wherein the kinematically coupled elements (KN1, KS) are designed as a substantially circular, first link groove (KN1) and as a link block (KS) guided in the link groove (KN1).

6. Device holder according to claim 5, wherein the link groove (KN1) has a reduced depth (t) in the defined angular range.

7. Device holder according to claim 5 or 6, wherein the link groove (KN1) is formed in a stepped manner.

8. Device holder according to one of the preceding claims, wherein the joint arrangement (201) comprises a second member (230), wherein the stroke mechanism (HM), at least when the members (100, 230) are in a mutual safety area around a collision area (K), prevents a collision of the two members (100, 230).

9. Device holder according to claim 8, having a second link groove (KN2) which extends only over a circular segment, preferably extending over a maximum of 200°, about a pivot bearing axis (D2, D3) of a corresponding second and/or third pivot bearing (202b, 202c), wherein preferably
- the second pivot bearing (202b) is arranged between a second member (230) and a base member (220), and
- the third pivot bearing (202c) between a first member (100) and a coupling part (210).

10. Device holder according to one of the preceding claims, with
- a housing (H) and
- a cover bulkhead (240), preferably resiliently mounted, which always covers a variable gap (S) between the housing (H) and the first member (100).

11. Device holder according to claim 10, wherein the cover bulkhead (240) has a, preferably curved, cover surface (241) which covers the gap (S) by means of a spring-loaded mounting (242), wherein at least one spring force acts in the direction of a longitudinal strut (102) of the first member (100).

12. Device holder according to claim 10 or 11, wherein the cover bulkhead (240) is always in contact with the longitudinal strut (102) by means of the spring-loaded mounting (242).

13. Device holder (200), according to one of claims 1 to 9 and one of claims 10 to 12, wherein the cover bulkhead (240) simultaneously acts as one of the kinematically coupled elements (KS) of the stroke mechanism (HM).

14. Device holder according to claim 13, wherein the cover bulkhead (240) has a sliding block (KS) on a sprung side, which runs positively guided in a corresponding sliding block groove (KN1, KN2).

15. Use of a cover bulkhead (240) for protection against jamming in a gap (S) between a strut (102) of a height-adjustable first member (100) and a housing (H) of an device holder (200), the cover bulkhead (240) being mounted, preferably resiliently, to cover the gap (S) and/or for collision avoidance, at least when the first member (100) is located in a safety area around a potential collision area (K), wherein a stroke mechanism (HM) causes a stroke (h) parallel to the pivot bearing axis (D1) during a rotary movement of the first member (100) about the pivot bearing axis (D1) in a predetermined angular range of a first pivot bearing (202a).

## Revendications

1. Support d'appareil (200), de préférence pour un moniteur (1) à maintenir, avec
- une partie de base (220) destinée à être placée à un objet de référence (2),
- une partie d'accouplement (210) pour l'accouplement d'un appareil (1) à maintenir,
- un agencement d'articulation (201) couplant la partie de base (220) et la partie d'accouplement (210), qui comprend au moins un premier élément (100) réglable en hauteur, un premier palier de rotation (202a) dans lequel le premier élément (100) est logé de manière à pouvoir tourner autour d'un axe de palier de rotation (D1), et un mécanisme de levage (HM), qui, lors d'un mouvement de rotation du premier élément (100) autour de l'axe de palier de rotation (D1), provoque une course (h) parallèle à l'axe de palier de rotation (D1) dans une plage angulaire prédéterminée du premier palier de rotation (202a), au moins lorsque le premier élément (100) se trouve dans une zone de sécurité autour d'une zone de collision potentielle (K).

2. Support d'appareil selon la revendication 1, dans lequel le mécanisme de levage (HM) comprend deux éléments (KN1, KS) couplés cinématiquement avec chacun un flanc (F1, F2), lesquels éléments (KN1, KS) forcent la course (h) par complémentarité de forme lors du mouvement de rotation relatif au moyen d'un glissement des flancs (F1, F2) des deux éléments (KN1, KS).

3. Support d'appareil selon la revendication 2, dans lequel le mécanisme de levage (HM) génère la course (h) en exerçant un couple sur le premier élément (100) par l'un des éléments couplés cinématiquement (KS).

4. Support d'appareil selon la revendication 2 ou 3, dans lequel au moins le flanc (F1, F2) de l'un des éléments (KN1, KS) présente un biseau.

5. Support d'appareil selon l'une des revendications précédentes, dans lequel les éléments (KN1, KS) couplés cinématiquement sont réalisés sous la forme d'une première rainure de coulisse (KN1) substantiellement circulaire et d'un coulisseau (KS) guidé dans la rainure de coulisse (KN1).

6. Support d'appareil selon la revendication 5, dans lequel la rainure de coulisse (KN1) présente une profondeur réduite (t) dans la zone angulaire définie.

7. Support d'appareil selon la revendication 5 ou 6, dans lequel la rainure de coulisse (KN1) est étagée.

8. Support d'appareil selon l'une quelconque des revendications précédentes, dans lequel l'agencement d'articulation (201) comprend un deuxième élément (230), dans lequel le mécanisme de levage (HM), au moins lorsque les éléments (100, 230) sont dans une zone de sécurité mutuelle autour d'une zone de collision (K), empêche une collision des deux éléments (100, 230).

9. Support d'appareil selon la revendication 8, avec une deuxième rainure de coulisse (KN2) qui s'étend seulement sur un segment de cercle, s'étendant de préférence sur 200° au maximum, autour d'un axe de palier de rotation (D2, D3) d'un deuxième et/ou d'un troisième palier de rotation (202b, 202c) correspondant, où de préférence
- le deuxième palier de rotation (202b) entre un deuxième élément (230) et un élément de base (220), et
- le troisième palier de rotation (202c) est disposé entre un premier élément (100) et une partie d'accouplement (210).

10. Support d'appareil selon l'une des revendications précédentes, avec
- un boîtier (H) et
- une cloison de recouvrement (240), de préférence montée sur ressort, qui recouvre toujours un espace variable (S) entre le boîtier (H) et le premier élément (100).

11. Support d'appareil selon la revendication 10, dans lequel la cloison de recouvrement (240) présente une surface de recouvrement (241), de préférence incurvée, qui recouvre la fente (S) au moyen d'un logement à ressort (242), au moins une force de ressort agissant en direction d'une entretoise longitudinale (102) du premier élément (100).

12. Support d'appareil selon la revendication 10 ou 11, la cloison de recouvrement (240) étant toujours en appui sur l'entretoise longitudinale (102) au moyen du palier à ressort (242).

13. Support d'appareil (200), selon l'une des revendications 1 à 9 et l'une des revendications 10 à 12, dans lequel la cloison de recouvrement (240) agit en même temps comme l'un des éléments (KS) couplés cinématiquement du mécanisme de levage (HM).

14. Support d'appareil selon la revendication 13, dans lequel la cloison de recouvrement (240) présente sur un côté à ressort un coulisseau (KS) qui se déplace de manière forcée dans une rainure de coulisse correspondante (KN1, KN2).

15. Utilisation d'une cloison de recouvrement (240) pour la protection contre le coincement dans une fente (S) entre une entretoise (102) d'un premier élément (100) réglable en hauteur et un boîtier (H) d'un support d'appareil (200), la cloison de recouvrement (240) étant logée pour le recouvrement de la fente (S), de préférence de manière élastique, et/ou pour éviter les collisions, au moins lorsque le premier élément (100) se trouve dans une zone de sécurité autour d'une zone de collision potentielle (K), un mécanisme de levage (HM) provoquant une course (h) parallèle à l'axe du palier de rotation (D1) lors d'un mouvement de rotation du premier élément (100) autour de l'axe du palier de rotation (D1) dans une plage angulaire prédéterminée d'un premier palier de rotation (202a).
